# EUROPEAN PATENT APPLICATION

(11) **EP 4 604 041 A1**
(43) Date of publication of application: **20.08.2025**
(21) Application number: 24158237.8
(22) Date of filing: 16.02.2024
(51) Int. Cl.: G06Q 30/0601, G06Q 20/10, G06Q 20/22, H04L 9/00

(54) **SYSTEM AND METHOD FOR PROVIDING A MONEY TRANSFER OFFER TO A USER**

(71) Applicant: Mastercard International Incorporated, Purchase NY 10577 (US)
(72) Inventor: SHARMA, Sahil, 560087 Bengaluru, Karnataka (IN); YADAV, Rakesh, Monroe Township, New Jersey, 08831 (US); PALISETTI, Krishna Mohan, 560066 Bangalore, Karnataka (IN); KUMAR, Varun, Ickenham, Uxbridge, UB10 8HW (GB)
(74) Representative: Murgitroyd & Company

(57) **Abstract**

The present disclosure relates to a computer-implemented method (300) for providing a money transfer offer to a user (110), the method (300) comprising: determining (302) whether one or more money transfer offers are applicable to a money transfer event that a user (110) intends to initiate; for each of the one or more money transfer offers applicable to the money transfer event: sending (306) a request to a smart contract proxy (160) associated with a service (150), wherein the request is for information required to evaluate a criterion defined by the money transfer offer, and wherein the smart contract proxy (160) is configured to: record (310) data associated with the request to a service invocation blockchain (180); and forward (312) the request to the service (150); receiving (314) the information required to evaluate the criterion; determining (316) that the information received from the service (150) satisfies the criterion; and providing (320), to a user device (120), the money transfer offer.

## Description

### FIELD

The present disclosure relates to a system and a computer-implemented method for providing a money transfer offer to a user.

### BACKGROUND

Various offer providers provide money transfer offers that may be applicable to a money transfer event in which a user transfers an amount of money to a recipient. For example, an offer provider may provide a "buy now pay later" offer, in which the offer provider transfers the amount of money to the recipient, and the user reimburses the offer provider at a later date (e.g. in a number of instalments). The money transfer offers provided by various offer providers may have different applicability criteria (e.g. some may only be applicable to amounts of money below a threshold), and may include eligibility criteria (e.g. the user may only be eligible if their credit score exceeds a threshold).

The current process by which a user leverages a money transfer offer provided by an offer provider is highly inefficient. For example, if a user is aware of four money transfer offers provided by different offer providers, then the user must provide data to four different offer providers in order to determine whether the money transfer offer is applicable to the money transfer event, and in order for the user's eligibility for the money transfer offer to be evaluated by the offer provider. Having provided data to the different offer providers, the user may establish that only three of the money transfer offers are applicable to their money transfer event. Continuing this example, each of the three applicable money transfer offers may specify that the user's credit score must exceed a particular threshold. Therefore, each of the three offer providers providing the applicable money transfer offers must request the user's credit score from a credit score service, which may involve each offer provider exchanging data and payment with the credit score service. Upon receipt of the user's credit score, one of the offer providers may determine that the user is ineligible for its money transfer offer, meaning that the user is eligible for only two of the money transfer offers. Having made four separate requests to different offer providers, the user can then choose between the two money transfer offers.

It will be appreciated from the above discussion that the current process is time consuming for the user, involves high network traffic (in terms of the data sent to and received from the offer providers), and imposes data processing requirements at each of the offer providers. In particular, the user has spent time in providing data to offer providers that provide money transfer offers that are either not applicable to their money transfer event, or that the user is not eligible for, leading to unnecessary network traffic, data storage at the offer providers, and data processing at the offer providers.

Accordingly, there exists a need for a more efficient process for providing money transfer offers to a user. In particular, there is a need for a process that is less time consuming for a user, and in which network traffic, data processing and data storage are minimised.

### SUMMARY

This summary introduces concepts that are described in more detail in the detailed description. It should not be used to identify essential features of the claimed subject matter, nor to limit the scope of the claimed subject matter.

According to a first aspect of the present disclosure, there is provided a computer-implemented method for providing a money transfer offer to a user, the method comprising: determining whether one or more money transfer offers are applicable to a money transfer event that a user intends to initiate; for each of the one or more money transfer offers applicable to the money transfer event: sending a request to a smart contract proxy associated with a service, wherein the request is for information required to evaluate a criterion defined by the money transfer offer, and wherein the smart contract proxy is configured to record data associated with the request to a service invocation blockchain; and forward the request to the service; receiving the information required to evaluate the criterion; determining that the information received from the service satisfies the criterion; and providing, to a user device, the money transfer offer.

The money transfer offer is automatically provided to the user if it is determined that the user is eligible for the money transfer offer (i.e. that the criterion defined by the money transfer offer is satisfied). This means that the user does not need to provide a separate request to an offer provider in order to take advantage of a money transfer offer provided by the offer provider. Moreover, by only providing offers that the user is eligible for (i.e. offers for which the criteria defined by the offers is satisfied), the user does not have to submit multiple requests to multiple different offer providers in order to establish the offers that they can take advantage of. This means that the amount of network traffic and data processing required in order to present the user with the money transfer offers that they are eligible for is reduced.

Consequently, a single entity (e.g. one or more servers implementing the method) interfaces with the services required in order to determine whether a user is eligible for a money transfer offer. This means that money transfer offers can be evaluated faster and more efficiently, compared to a scenario in which an offer provider providing a money transfer offer interfaces with the services directly.

The service invocation blockchain provides a tamper-proof mechanism for recording all usage data associated with use of the services, meaning that the usage data cannot be manipulated by the offer provider of the money transfer offer, by one or more servers implementing the method, or by the service itself. Recording the usage data in a tamper-proof manner allows for automatic execution of smart contracts that provide payment to the services.

The computer-implemented method may further comprise capturing a user intent to initiate the money transfer event using a user device. By capturing the user intent to initiate the money transfer event, money transfer offers can be automatically provided to the user immediately prior to initiating the money transfer event, meaning that the user does not have to submit multiple requests to multiple offer providers in advance of initiating the money transfer event.

The user intent to initiate the money transfer event may be captured via an application running on the user device. The application may provide a notification that the user intends to initiate the money transfer event. The user intent to initiate the money transfer event may be captured in response to the user providing a monetary amount and an identifier of a recipient via the user device. The user intent to initiate the money transfer event may be captured in response to receiving the monetary amount and the identifier of the recipient at one or more servers implementing the method.

The computer-implemented method may further comprise: receiving an offer request from an offer provider, wherein the offer request includes information identifying the money transfer offer; determining that the offer request includes a service subscription request for subscription to the service; deploying a smart contract associated with the service subscription request; deploying the smart contract proxy associated with the service. Deploying the smart contract proxy allows all calls to the service to be recorded to the blockchain, thereby providing a tamper-proof record of the usage of the services. Deploying a smart contract associated with the service subscription request provides a tamper-proof mechanism for enforcing the terms of the offer provider's subscription to the service, meaning that the subscription cannot be tampered with by the offer provider or the service.

Deploying the smart contract proxy may comprise implementing network constraints to route all requests to the service via the smart contract proxy. The smart contract may be deployed to a subscription blockchain.

Deploying the smart contract proxy may comprise configuring the smart contract proxy to: invoke one or more smart contracts executed on the service invocation blockchain that are configured to record information associated with usage of the service, for every request received at the smart contract proxy; and forward the request to the service. In addition, deploying the smart contract proxy may additionally comprise configuring the smart contract proxy to query the subscription blockchain to determine whether the offer provider's subscription to the service is still active.

The computer-implemented method may further comprise providing an interface for the offer provider to input the offer request.

The computer-implemented method may further comprise: identifying, based on the service subscription request, a smart contract template from a smart contract template repository; and compiling the smart contract using the service subscription request and the smart contract template.

The computer-implemented method may further comprise: receiving a marketplace subscription request from the offer provider, wherein the marketplace subscription request is for subscription to one or more services provided by one or more servers that implement the method; and deploying, to a subscription blockchain, a smart contract associated with the marketplace subscription request. Deploying a smart contract associated with the marketplace subscription request provides a tamper-proof mechanism for enforcing the terms of the offer provider's subscription to the one or more services provided by the one or more servers, meaning that the subscription cannot be tampered with by the offer provider or the one or more servers.

The data recorded by the smart contract proxy to the service invocation blockchain may comprise an indication of the request to the service. Consequently, the number of calls to the service can be logged on the blockchain in a tamper-proof manner, so that the payment associated with the subscription to the service can be determined. The data recorded by the smart contract proxy to the service invocation blockchain may comprise an indication of the availability of the service. Consequently, a service level availability of the service can be logged on the blockchain in a tamper-proof manner, so that any compensation associated with the availability of the service can be determined.

The computer-implemented method may further comprise: receiving an offer subscription request from the user, wherein the offer subscription request is for subscription to the money transfer offer; and deploying, to a subscription blockchain, a smart contract associated with the offer subscription request. Deploying a smart contract associated with the offer subscription request provides a tamper-proof mechanism for enforcing the terms of the user's subscription to the money transfer offer, meaning that the subscription cannot be tampered with by the user or the offer provider.

The information required to evaluate the criterion may be received from the smart contract proxy. Consequently, all communication with the service is routed via the smart contract proxy, so that data associated with the requests to the service can be recorded.

According to a second aspect of the present disclosure, there is provided a computer system comprising: one or more servers configured to: determine whether one or more money transfer offers are applicable to a money transfer event that a user intends to initiate; and for each of the one or more money transfer offers applicable to the money transfer event, send a request to a smart contract proxy associated with a service, wherein the request is for information required to evaluate a criterion defined by the money transfer offer, and wherein the smart contract proxy is configured to: record data associated with the request to a service invocation blockchain; and forward the request to the service; receive the information required to evaluate the criterion; determine that the information received from the service satisfies the criterion; and provide, to a user device, the money transfer offer.

According to a third aspect of the present disclosure, there is provided a computer-readable medium comprising instructions which, when executed by one or more processors of one or more computing devices, cause the one or more computing devices to carry out the method of the first aspect.

### BRIEF DESCRIPTION OF FIGURES

Specific embodiments are described below by way of example only and with reference to the accompanying drawings, in which:
FIG. 1 shows an overview of a computing environment for providing a money transfer offer to a user.
FIG. 2 shows an example implementation of the marketplace server shown in FIG. 1.
FIG. 3 is a flowchart of a method of providing a money transfer offer to a user.
FIG. 4 is a flowchart of a method of onboarding a money transfer offer at a marketplace server.
FIG. 5 is a flowchart of a method of subscribing an offer provider to a service.
FIG. 6 is a flowchart of a method of subscribing a user to a money transfer offer.
FIG. 7 is a schematic diagram of a computing device that may be used to implement the methods described herein.

### DETAILED DESCRIPTION

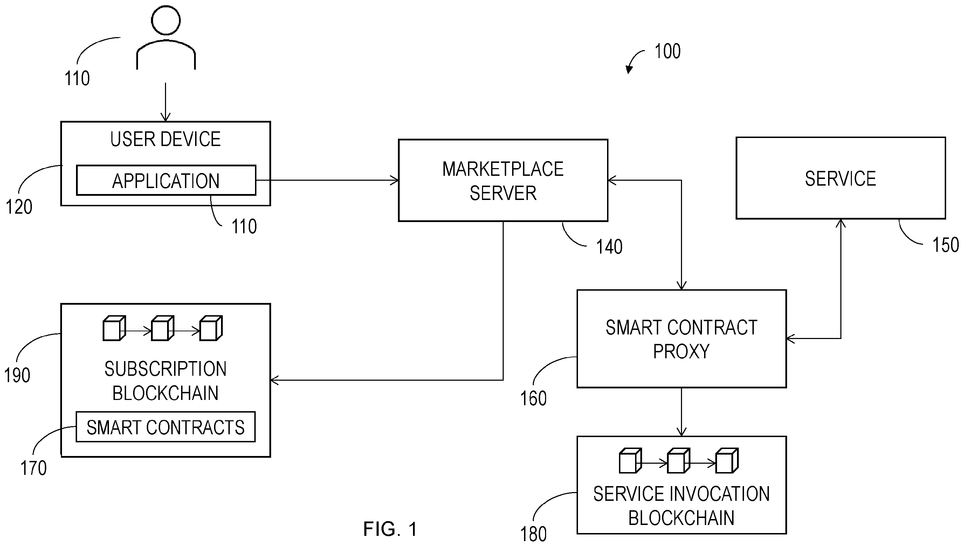

FIG. 1 is a high level schematic diagram of a computing environment 100 in which a money transfer offer is provided to a user 110. As shown in FIG. 1, the user 110 uses an application 130 running on a user device 120 to initiate a money transfer event.

The application 130 communicates with a marketplace server 140. The marketplace server 140 captures the intent of the user 110 to initiate the money transfer event. The marketplace server 140 then evaluates the money transfer event to determine whether any money transfer offers are applicable to the money transfer event.

If a money transfer event is determined as being applicable to the money transfer event, the marketplace server 140 determines whether any criteria are defined by the money transfer offer. If a criterion is defined by the money transfer offer, the marketplace server 140 sends a request to a service 150 for information required to evaluate the criterion defined by the money transfer offer.

The request from the marketplace server 140 to the service 150 is sent via a smart contract proxy 160 associated with the service 150. The smart contract proxy 160 is configured to record, to a service invocation blockchain 180, data associated with the request from the marketplace server 140 to the service 150. The smart contract proxy 160 is also configured to forward the request from the marketplace server 140 to the service 150. The smart contract proxy 160 is an application that provides an API for interfacing with the service invocation blockchain 180. The smart contract proxy 160 provides an off-chain endpoint that allows smart contracts executed on the service invocation blockchain 180 to be invoked, in order to record data associated with the request. One example of a smart contract proxy application is Hyperledger FireFly available from the Linux Foundation of San Francisco, US.

The service 150 then provides the information required to evaluate the criterion defined by the money transfer offer. The information provided by the service 150 is routed to the marketplace server 140. The marketplace server 140 uses the information provided by the service 150 to determine whether the criterion defined by the money transfer offer is satisfied. If the marketplace server 140 determines that the criterion defined by the money transfer offer is satisfied, it provides the money transfer offer to the user device 120.

The marketplace server 140 provides a marketplace that allows third-party money transfer offers associated with a money transfer event to be provided to the user 110 via the user device 120, in response to capturing a user intent to initiate the money transfer event. One example of a money transfer offer is a "buy now pay later" offer, where some or all of the payment associated with the money transfer event is made by the third-party, and the user 110 pays the remaining balance of the payment to the third-party at a later date. The marketplace server 140 automatically provides the money transfer offer to the user 110 if it determines that the user 110 is eligible for the money transfer offer. This means that the user 110 does not need to provide a separate request to the third-party in order to take advantage of the money transfer offer. Moreover, by only providing offers that the user 110 is eligible for (i.e. offers for which one or more criteria defined by the offers are satisfied), the user 110 does not have to submit multiple requests to multiple different third-parties in order to establish the offers that they can take advantage of. For example, a user 110 of an existing process may provide six requests across three different third-party providers, and ultimately establish that they are eligible for only two of those offers. In comparison, a user 110 of the marketplace server 140 would be presented with only the two offers that they are eligible for, meaning that the amount of network traffic and data processing required in order to present the user 110 with the offers that they are eligible for is reduced.

In addition, the marketplace server 140 manages services (e.g. service 150) that are configured to provide information associated with a money transfer event, so that the marketplace server 140 can determine whether the user 110 is eligible for the money transfer offer. Continuing the above example of a "buy now pay later" offer, the user 110 may be eligible for the money transfer offer if their credit score exceeds a credit score threshold and if no fraudulent activity is detected. In order to determine whether the user 110 is eligible for such an offer, the marketplace server 140 manages services 150 that include a credit score service and a fraud detection service. Consequently, the marketplace server 140 provides a single entity that interfaces with the services 150 required in order to determine whether a user 110 is eligible for a money transfer offer. This means that money transfer offers can be evaluated faster and more efficiently, compared to a scenario in which a third-party providing a money transfer offer interfaces with the services directly.

Efficient use of the services 150 to evaluate the money transfer offers is provided through the use smart contract proxies 160. All calls to services 150 to which the providers of the money transfer offers are subscribed are routed via respective smart contract proxies 160, which are configured to record information associated with their respective services 150 to the service invocation blockchain 180 (i.e. by invoking smart contracts executed on the service invocation blockchain 180). Specifically, the use of smart contract proxies 160 to route all calls to the services 150 allows all usage of the services 150 to be recorded to the service invocation blockchain 180 by the smart contract proxies 160. The service invocation blockchain 180 provides a tamper-proof mechanism for recording all usage data associated with use of the services 150, meaning that the usage data cannot be manipulated by the third-party provider of the money transfer offer, by the marketplace server 140, or by the service 150 itself. Recording the usage data in a tamper-proof manner allows for automatic execution of smart contracts that provide payment to the services 150. The marketplace server 140 therefore retrieves available money transfer offers and invokes the smart contract proxy endpoints associated with the services 150 used to evaluate the applicability of those money transfer offers.

The marketplace server 140 can also manage various subscriptions between the entities shown in FIG. 1, each of which may be implemented using smart contracts 170 executed on a subscription blockchain 190. For example, a third-party provider may subscribe to the marketplace server 140, so that its offers or services can be accessed when a user 110 uses a service provided by the marketplace server 140 (e.g. a money transfer service). As another example, a third-party provider may subscribe to a service 150 provided by the marketplace server 140 or by a separate third-party. As a further example, a user 110 may subscribe to one of the money transfer offers via the user device 120. Using smart contracts for each of these subscriptions provides an automated, tamper proof mechanism that ensures compliance with the terms of the subscription.

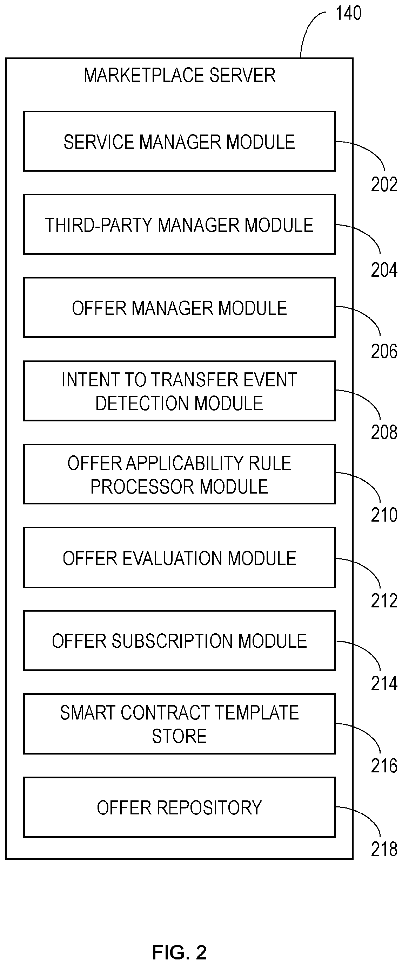

FIG. 2 shows an example implementation 200 of the computing environment shown in FIG. 1. As shown in FIG. 2, the marketplace server 140 includes a number of modules, each of which is explained in further detail below. Specifically, the marketplace server 140 includes: a service manager module 202, a third-party partner manager module 204, an offer manager module 206, an intent to transfer event detection module 208, an offer applicability rule processor module 210, an offer evaluation module 212, and an offer subscription module 214. The marketplace server 140 also includes a smart contract template store 216 and an offer repository 218.

The service manager module 202 manages the services 150 provided via the marketplace server 140. In one example, the marketplace server 140 is implemented by a payments network such as Mastercard, and some of the services 150 are provided by the payments network. For example, a first one of the services 150 may be a domestic payment service allowing a user 110 to transfer money to an entity located in the same country as the user 110. A second one of the services 150 may be a cross-border payment service allowing a user 110 to transfer money to an entity located in a different country to the user 110. A third one of the services 150 may be a fraud detection service provided by the payments network. As explained further below, other services 150 may be provided by third-party partners. For example, a third-party credit score provider may be onboarded by the marketplace server 140. A fourth one of the services 150 may therefore be a credit score service provided by the third-party credit score provider.

The third-party partner manager module 204 manages third-party partners that provide services 150 or money transfer offers managed by the marketplace server 140. Some third-party partners may provide money transfer offers that can be provided to users 110 if certain rules are satisfied. Other third-party partners may provide services 150 that can be used in order to establish whether rules associated with money transfer offers are satisfied. In some examples, one or more third-party partners may provide a money transfer offer and a service 150. In order to onboard money transfer offers, the third-party manager module 204 may carry out method 400 described below.

As part of onboarding the money transfer offers provided by an offer provider (e.g. third-party partner), the third-party partner manager module 204 records the services 150 that each offer provider has subscribed to. For example, a first third-party partner may provide a "buy now pay later" offer, whereas a second third-party partner may provide a credit score service. The "buy now pay later" offer may be presented to the user 110 if the user's credit score exceeds a certain threshold. Accordingly, the credit score service provided by the second third-party partner can be utilised in order to determine whether the user 110 is eligible for the "buy now pay later" offer. Therefore, the first third-party partner may subscribe to the credit score service provided by the second third-party partner, in order to determine whether the user 110 is eligible for the "buy now pay later" offer that it provides. The third-party partners can also subscribe to services 150 provided by the marketplace server 140. For example, the first third-party partner may also subscribe to a fraud detection service provided by the marketplace server 140, in order to determine whether fraudulent activity is detected.

In order to record the services 150 that each third-party partner subscribes to, the third-party manager module 204 may carry out method 500 described below. The owner of the service 150 being subscribed to defines subscription attributes. The third-party manager module 204 provides an interface for the third-party partner to input the required subscription attributes defined by the service owner. The third-party partner then chooses an appropriate subscription price plan (if multiple pricing options are available). The third-party partner than agrees to the terms and conditions relating to pricing, usage and violation, and submits the subscription request.

The third-party manager module 204 then identifies appropriate smart contract templates from the smart contract template store 216. The smart contract template store 216 may store a number of smart contract templates, including: a service contract violation template, which when implemented as a smart contract provides an output in the event that a threshold service level availability for the service 150 is not met; a subscription pricing template, which when implemented as a smart contract provides an output in response to the amount of usage of the service 150; and a terms and conditions template, which when implemented as a smart contract provides an output in the event of a violation of the terms and conditions.

The third-party manager module 204 combines the information received from the third-party partner with the identified smart contract templates, compiles smart contracts 170 associated with the third-party partner's subscription to the service 150, and deploys the smart contracts 170 on the subscription blockchain 190. At this point, the third-party partner's subscription to the service 150 is active. In addition, upon deployment of the smart contracts 170, a smart contract proxy 160 is also deployed, in order to record usage of the service 150 to the service invocation blockchain 180. Deploying the smart contract proxy 160 involves configuring the smart contract proxy 160 to (i) invoke one or more smart contracts executed on the service invocation blockchain 180 that are configured to record information associated with usage of the service 150, for every service request received at the smart contract proxy 160; and (ii) forward the request to the service 150 (i.e. by specifying an address to which the request is to be forwarded). In addition, deploying the smart contract proxy 160 may additionally comprise configuring the smart contract proxy 160 to query the subscription blockchain 190 to determine whether the third-party partner's subscription to the service 150 is still active.

Network constraints may be implemented at the marketplace server 140 so that all calls to the services 150 are routed via the respective smart contract proxy 160 associated with that service 150 (e.g. using a routing table associating the services 150 with their respective smart contract proxies 160). In some examples, the subscription blockchain 190 and the service invocation blockchain 180 may be the same blockchain. In other examples, the subscription blockchain 190 and the service invocation blockchain 180 may be implemented as separate blockchains, in order to more efficiently support querying of the service invocation blockchain 180.

The offer manager module 206 manages money transfer offers that may be provided to the user 110 upon capture of an intent of the user 110 to initiate the money transfer event. Money transfer offers may be provided by the marketplace server 140 itself. For example, where the marketplace server 140 is implemented by a payments network, the marketplace server 140 may provide a "zero processing fee" offer from the payments network. Such an offer may be provided to the user 110 in response to capturing the user's intent to initiate a money transfer event to a domestic entity, where the recipient of the money transfer event (i.e. the domestic entity) is, for example, identified as a hospital. Other money transfer offers are provided by third-party partners. For example, a first third-party partner may provide a "buy now pay later" offer where the user 110 can pay in three instalments. Another third-party partner may provide a similar offer where the user 110 can pay in six instalments. Each money transfer offer includes specific rules that determine whether the money transfer offer is applicable to the money transfer event, and whether user 110 is eligible for the money transfer offer. For example, the rules may include applicability criteria specifying that: the user 110 intends to transfer money using a particular service 150 (e.g. domestic, or cross-border), and/or that the recipient of the money transfer event is a particular entity (e.g. hospital). In addition, the rules may include eligibility criteria specifying that a fraud detection check associated with the money transfer event is false, and/or that a credit score associated with the user 110 is greater than a certain threshold, etc. The offer manager module 206 stores all offers (including their rules) in the offer repository 218.

The intent to transfer event detection module 208 is configured to capture an intent of the user 110 to initiate the money transfer event. In one example, the intent to transfer event detection module 208 receives, from the application 130 running on the user device 120, a monetary amount that the user intends to transfer, along with an identifier of a recipient. Upon receipt of both of these pieces of information, the intent to transfer event detection module 208 determines that the user 110 intends to initiate a money transfer event. In another example, the application 130 itself may determine that a user has entered a monetary amount and an identifier of a recipient, and may notify the intent to transfer event detection module 208 that the user 110 intends to initiate the money transfer event. Accordingly, the intent to transfer event detection module 208 captures the intent of the user 110 to initiate the money transfer event in response to receiving the notification from the application 130.

In a further example, the user 110 may not be required to input a monetary amount or an identifier of a recipient. For example, if a user 110 is accessing an application 130 provided by a subscription service (e.g. a video streaming application) and their subscription to the service is about to expire, a prompt such as a pop-up window may be provided within the application 130 displayed on the user device 120, asking the user 110 if they would like to renew their subscription. In this case, the recipient is known (i.e. the subscription service) and the monetary amount is also known (i.e. the payment required to maintain the subscription). Accordingly, the intent to transfer event detection module 208 may capture the intent of the user 110 to initiate the money transfer event in response to receiving an indication from the application 130 that the prompt has been displayed to the user 110.

As a further example, the user 110 has missed a utility bill payment, and a notification is sent to the user 110 via the application 130, asking the user 110 if they would like to make use of a money transfer offer in order to make the payment to the utility company. In this case, the recipient is known (i.e. the utility company) and the monetary amount is also known (i.e. the bill payment plus any late payment surcharges). Accordingly, the intent to transfer event detection module 208 may capture the intent of the user 110 to initiate the money transfer event in response to receiving an indication from the application 130 that the prompt has been displayed to the user 110.

The offer applicability rule processor module 210 determines whether any money transfer offers are applicable to the money transfer event that the user 110 intends to initiate (i.e. as captured by the intent to transfer event detection module 208). As a first step, the offer applicability rule processor module 210 determines whether any of the money transfer offers stored in the offer repository 218 are applicable to the information provided by the user 110 (e.g. monetary amount and recipient) or the service 150 being used by the user 110 to initiate the money transfer event. For example, certain money transfer offers may be applicable if the recipient of the money transfer event is a hospital, and if the service 150 being used is a domestic money transfer service. As another example, certain money transfer offers may be applicable if the user 110 is initiating the money transfer event using a specific service 150 (e.g. a cross-border payments service). Other money transfer offers may not have criteria specifying a particular service 150, monetary amount or recipient, and may therefore be applicable to all money transfer events.

As a second step, the offer applicability rule processor module 210 evaluates the eligibility criteria specified by the money transfer offers identified as being applicable to the money transfer event. The offer applicability rule processor module 210 sends a request to any services 150 that provide information used to establish whether the criteria specified by the money transfer offers are satisfied. For example, if a money transfer offer includes criteria specifying that no fraudulent activity is detected by a fraud detection service and that a user's credit score must exceed a credit score threshold, then the offer applicability rule processor module 210 sends a request to a fraud detection service for a fraud check on the user 110, and a request to a credit score service for the user's credit score. As explained above, network constraints may be implemented at the marketplace server 140 so that all calls to the services 150 are routed via the respective smart contract proxy 160 associated with that service 150. Consequently, the requests to the credit score service and the fraud detection service are captured by respective smart contract proxies 160. As explained in more detail below, each smart contract proxy 160 is configured to record data associated with the request to its respective service 150 to the service invocation blockchain 180.

The offer evaluator module 212 receives the information requested from the services 150 by the offer applicability rule processor module 210, and uses the received information to evaluate whether the criteria defined by the applicable money transfer offers are satisfied. If the offer evaluator module 212 determines that the criteria defined by any applicable money transfer offers are satisfied, then the offer evaluator module 212 provides those money transfer offers to the user device 120 (e.g. for display by the application 130 running on the user device 120), so that they can be presented to the user 110.

The offer subscription module 214 determines whether the user 110 has selected any of the money transfer offers presented to them. If the user 110 selects any of the money transfer offers, then the offer subscription module 214 provides an interface allowing the user 110 to input subscription attributes defined by the offer provider (i.e. the marketplace server 140 or a third-party partner) and submit the subscription request. Based on the subscription attributes provided by the user 110, smart contract templates are identified from the smart contract template store 216. The offer subscription module 214 then populates the identified smart contract templates using the subscription attributes provided by the user 110, compiles smart contracts 170 and deploys the smart contracts 170 to the subscription blockchain 190 (e.g. using Truffle CLI or EtherJS for smart contract template customisation, compilation and deployment). The offer subscription module 214 may subscribe the user 110 to the money transfer offers using the method 600 described below.

As explained above, each call to a service 150 is routed via a smart contract proxy 160 associated with that service 150. A call to a service 150 is routed to the respective smart contract proxy 160 by enforcing, at the marketplace server 150, network constraints on calls to the services 150. The smart contract proxy 160 records, to the service invocation blockchain 180, an indication of each call to its respective service 150, so that the number of calls to the service 150 can be monitored (e.g. so that payment can be determined in the event that the third-party partner's subscription to the service 150 is a pay-per-use subscription). The smart contract proxy 160 also records, to the service invocation blockchain 180, an indication of whether a response was received from the service 150, so that the service level availability of the service 150 can be determined. The information is recorded to the service invocation blockchain 180 by invoking, by the smart contract proxy 160, smart contracts executed on the service invocation blockchain 180. The number of calls to the service 150 and the service level availability of the service 150 can be used by the smart contract 170 (e.g. using a cross-chain smart contract setup if the service invocation blockchain 180 and the subscription blockchain 190 are implemented as separate blockchains) to determine the level of payment from the third-party partner to the service provider, and whether any compensation from the service provider to the third-party provider is required. For example, the smart contract 170 can issue range-based queries in order to retrieve data from the service invocation blockchain 180.

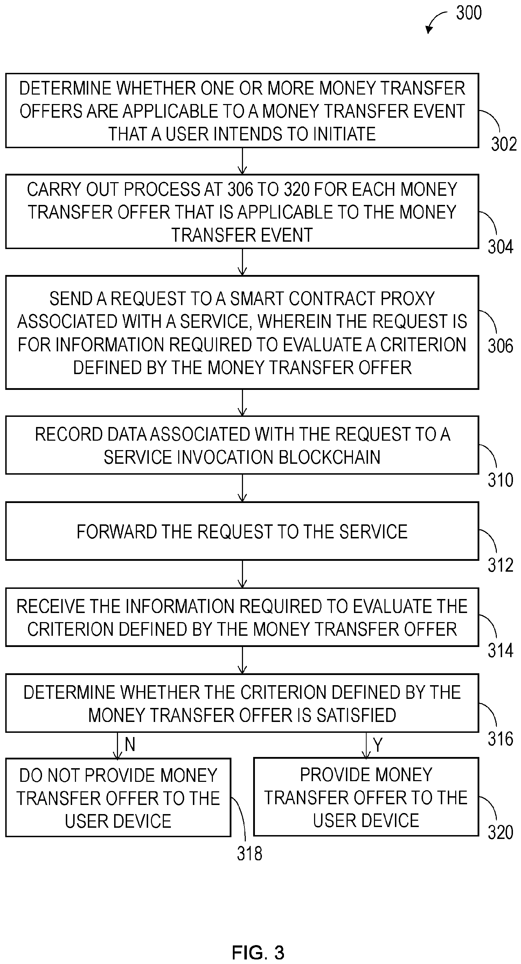

FIG. 3 is a flowchart of a method 300 of providing a money transfer offer to a user. At 302, a determination is made by a marketplace server 140 as to whether one or more money transfer offers are applicable to a money transfer event that a user 110 intends to initiate. The user's intent to initiate the money transfer event may be captured by the marketplace server 140, for example, via an application 130 running on a user device 120. The user's intent to initiate the money transfer event may be determined by the marketplace server 140 in response to the user 110 inputting, via the application 130, a monetary amount and an identifier of a recipient.

At 304, the process set out at 306 to 320 is carried out for each money transfer offer that is applicable to the money transfer event. At 306, the marketplace server 140 sends a request to a smart contract proxy 160 associated with a service 150. The request is for information required to evaluate a criterion defined by the money transfer offer. In one example, network constraints are enforced at the marketplace server 140 in order to direct all calls to the service 150 to its corresponding smart contract proxy 160.

At 310, the smart contract proxy 160 records data associated with the request to a service invocation blockchain 180 by invoking smart contracts executed on the service invocation blockchain 180. For example, the smart contract proxy 160 may record the fact that a call was made to the service 150 (in order to log a total number of calls to the service 150 for evaluation of the money transfer offer), and/or an availability of the service 150 (in order to establish a service level availability of the service 150).

At 312, the smart contract proxy forwards the request to the service 150 (for example, using the address of the service 150 specified during configuration of the smart contract proxy 160). At 314, the marketplace server 140 receives the information required to evaluate the criterion defined by the money transfer offer. If the money transfer offer includes multiple criteria that require information from services 150 in order to be evaluated, then steps 306 to 314 are repeated in parallel (or sequentially) until the information required to evaluate all criteria is received.

At 316, the marketplace server determines whether the criterion defined by the money transfer offer is satisfied. If the marketplace server 140 determines that the criterion is not satisfied, then at 318, the money transfer offer is not provided to the user device 120. If the marketplace server 140 determines that the criterion is satisfied, then at 320, the money transfer offer is provided to the user device 120.

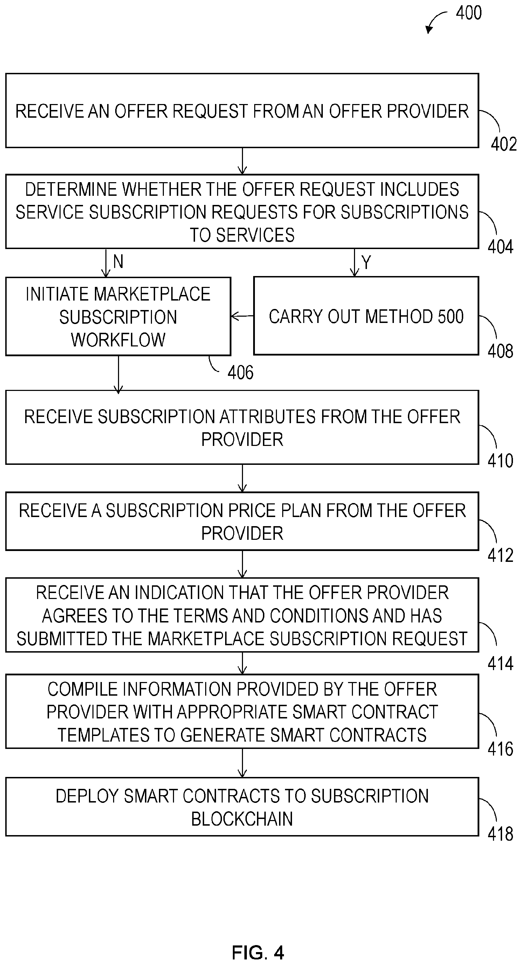

FIG. 4 is a flowchart of a method 400 of onboarding a money transfer offer at a marketplace server 140. At 402, an offer request is received from an offer provider (e.g. a third-party partner). The offer request includes information describing a money transfer offer that the offer provider would like to be made available via the marketplace server 140. The money transfer offer may include applicability criteria (e.g. associated with the monetary amount and identifier of the recipient of the money transfer event) indicating the money transfer events that the money transfer offer is applicable to, and eligibility criteria (e.g. fraud detection, credit score) that a user is required to satisfy in order to benefit from the money transfer offer.

At 404, the marketplace server 140 determines whether the offer request includes one or more service subscription requests for one or more subscriptions to one or more services 150 in order for any eligibility criteria of the money transfer offer to be evaluated. If the offer request does not include a service subscription request, then the method continues to 406. If, on the other hand, the offer request includes a service subscription request, then at 408, the marketplace server 140 carries out method 500.

At 406, the marketplace server 140 initiates a marketplace subscription workflow (i.e. steps 410 to 418) for receiving a marketplace subscription request for the offer provider to subscribe to the marketplace server 140 (i.e. so that the offer provider's offer(s) can be provided to users 110 of the marketplace server 140). At 410, the marketplace server 140 receives subscription attributes from the offer provider. For example, the marketplace server 140 may provide an interface for the offer provider to provide the subscription attributes. The subscription attributes define the information that is needed to be provided by the user 110 when subscribing to the offer. As one example, one subscription attribute may be called "package", specifying allowed values of "gold", "silver" and "bronze". When a user 110 is subscribing to the offer, they would need to choose one of the three allowed values.

At 412, the marketplace server 140 receives a subscription price plan (e.g. monthly payment, pay-per-use payment), for example via the interface provided by the marketplace server 140. At 414, the marketplace server 140 receives an indication that the offer provider agrees to the terms and conditions (e.g. regarding pricing, usage and violation) and has submitted the marketplace subscription request, for example via the interface provided by the marketplace server 140.

After this step, the marketplace server 140 may take additional actions depending on the services 150 subscribed to by the offer provider. For example, the marketplace server 140 may need to create customer records and customer keys in order to record information provided by a fraud detection service. The additional actions taken by the marketplace server 150 will vary from service to service.

At 416, the marketplace server 140 compiles the information provided by the offer provider in the marketplace subscription request with appropriate smart contract templates (e.g. from the smart contract template store 216) to generate smart contracts. Then, at 418, the marketplace server 140 deploys the smart contracts to the subscription blockchain 190, at which point the offer provider's subscription to the marketplace server 140 is active.

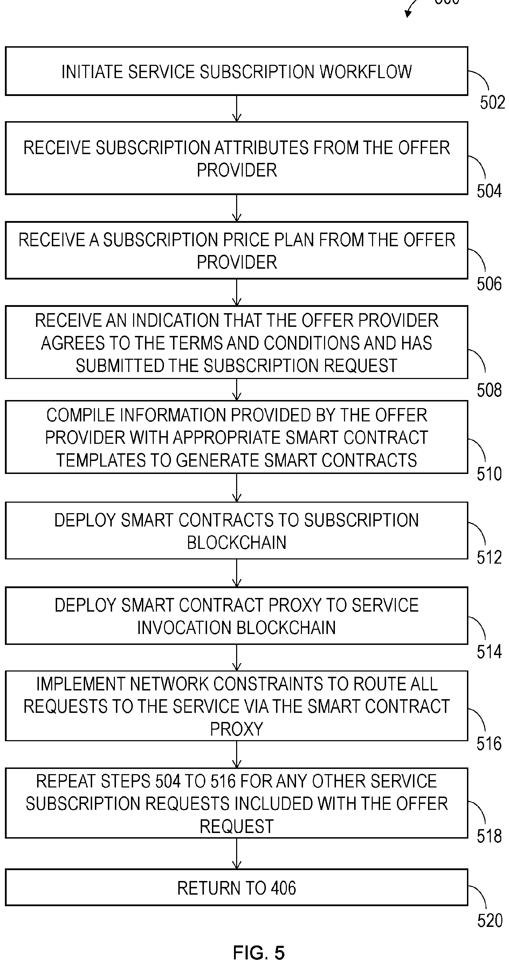

FIG. 5 is a flowchart of a method of subscribing an offer provider to a service 150 in order to satisfy a service subscription request received from the offer provider (e.g. third-party partner). At 502, the marketplace server 140 initiates a service subscription workflow (i.e. steps 504 to 516) for the offer provider's subscription to the service 150. At 504, the marketplace server 140 receives subscription attributes from the offer provider. For example, the marketplace server 140 may provide an interface for the offer provider to provide the subscription attributes. At 506, the marketplace server 140 receives a subscription price plan (e.g. monthly payment, pay-per-use payment), for example via the interface provided by the marketplace server 140. At 508, the marketplace server 140 receives an indication that the offer provider agrees to the terms and conditions (e.g. regarding pricing, usage and violation) and has submitted the subscription request, for example via interface provided by the marketplace server 140.

At 510, the marketplace server 140 compiles the information provided by the offer provider in the submitted subscription request with appropriate smart contract templates (e.g. from the smart contract template store 216) to generate smart contracts. Then, at 512, the marketplace server 140 deploys the smart contracts to the subscription blockchain 190. At 514, the marketplace server 140 also deploys a smart contract proxy 160 associated with the service 150 to the service invocation blockchain 180. Deploying the smart contract proxy 160 includes configuring the smart contract proxy 160 to invoke, every time a call to the service 150 is received, one or more smart contracts executed on the service invocation blockchain 180 that are configured to record information associated with usage (e.g. amount of usage, availability of service) of the service 150, and configuring the smart contract proxy 160 to forward, to the service 150, a request originating from the marketplace server 140 for information from the service 150. Deploying the smart contract proxy 160 may additionally include configuring the smart contract proxy 160 to query the subscription blockchain 190 to determine whether the offer provider's subscription to the service 150 is still active.

Finally, at 516, network constraints are implemented at the marketplace server 140 in order to route all requests to the service 150 via the smart contract proxy 160 associated with the service 150. At this point, the offer provider's subscription to the service 150 is active. At 518, the marketplace server 140 repeats the service subscription workflow for any other service subscription requests included with the offer request, before continuing, at 520, to step 406 of method 400. If an offer provider attempts to provide an offer that relies on information from a service 150 without subscribing to that service 150, the marketplace server 140 does not onboard the offer.

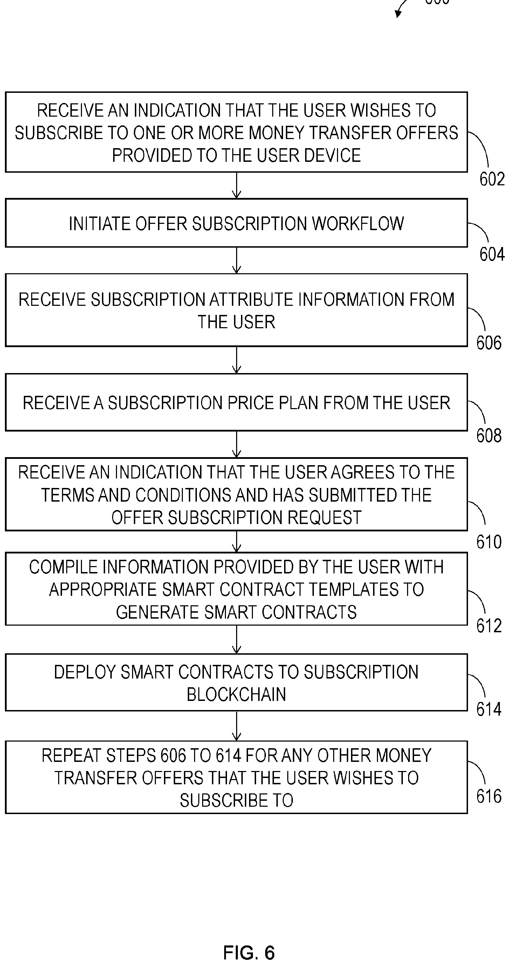

FIG. 6 is a flowchart of a method 600 of subscribing a user 110 to a money transfer offer provided by an offer provider (e.g. third-party partner). The method 600 may be carried out by the marketplace server 140 after it has provided the money transfer offers to the user at 320 of method 300.

At 602, the marketplace server 140 receives an indication that the user 110 wishes to subscribe to one or more money transfer offers provided to the user device 120. At 604, the marketplace server 140 initiates, for each of the one or more money transfer offers that the user 110 wishes to subscribe to, an offer subscription workflow (i.e. steps 606 to 614) for receiving an offer subscription request for the user 110 to subscribe to the money transfer offer. At 606, the marketplace server 140 receives subscription attribute information from user 110. For example, the marketplace server 140 may provide an interface for the user 110 to provide the subscription attribute information. The subscription attribute information may be information associated with the subscription attributes defined by the offer provider (e.g. a "gold", "silver" or "bronze" subscription level). At 608, the marketplace server 140 receives a subscription price plan (e.g. monthly payment, pay-per-use payment), for example via the interface provided by the marketplace server 140. At 610, the marketplace server 140 receives an indication that the user 110 agrees to the terms and conditions (e.g. regarding pricing, usage and violation) and has submitted the offer subscription request, for example via the interface provided by the marketplace server 140.

At 612, the marketplace server 140 compiles the information provided by the user 110 in the offer subscription request with appropriate smart contract templates (e.g. from the smart contract template store 216) to generate smart contracts 170. Then, at 614, the marketplace server 140 deploys the smart contracts to the subscription blockchain 190, at which point the user's subscription to the money transfer offer is active. At 616, the marketplace server 140 repeats the offer subscription workflow for any other money transfer offers that the user 110 wishes to subscribe to.

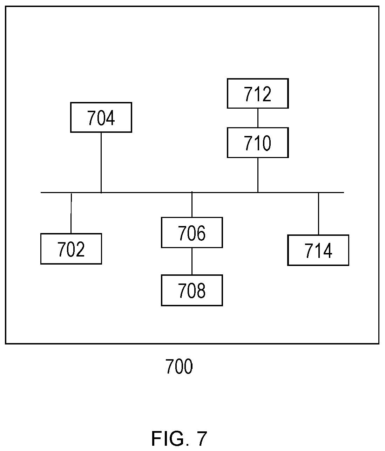

FIG. 7 is a schematic and simplified representation of a computer apparatus 700 which can be used to perform the methods described herein, either alone, in combination with other computer apparatuses or as part of a "cloud" computing arrangement. In particular, the computer apparatus 700 may be configured to perform the steps of the methods 300, 400, 500 and/or 600 described above that are carried out by the marketplace server 140, in order to implement the functionality of the marketplace server 140 described above. The computing apparatus 700 may also be representative of the user device 120 via which the user's intent to initiate a money transfer event is captured, and to which one or more money transfer offers associated with the money transfer event are provided.

The computer apparatus 700 comprises various data processing resources such as a processor 702 (in particular a hardware processor) coupled to a central bus structure. Also connected to the bus structure are further data processing resources such as memory 704. A display adapter 706 connects a display device 708 to the bus structure. One or more user-input device adapters 710 connect a user-input device 712, such as a keyboard and/or a mouse to the bus structure. One or more communications adapters 714 are also connected to the bus structure to provide connections to other computer systems 700 and other networks (e.g. to the smart contract proxies 160).

In operation, the processor 702 of computer system 700 executes a computer program comprising computer-executable instructions that may be stored in memory 704. When executed, the computer-executable instructions may cause the computer system 700 to perform one or more of the methods described herein, such as any of the methods 300, 400, 500 or 600 described above. The results of the processing performed may be displayed to a user via the display adapter 706 and display device 708. User inputs for controlling the operation of the computer system 700 may be received via the user-input device adapters 710 from the user-input devices 712.

It will be apparent that some features of computer system 700 shown in FIG. 7 may be absent in certain cases. For example, one or more of the plurality of computer apparatuses 700 may have no need for display adapter 706 or display device 708. This may be the case, for example, for particular server-side computer apparatuses 700 which are used only for their processing capabilities and do not need to display information to users. Similarly, user input device adapter 710 and user input device 712 may not be required. In its simplest form, computer apparatus 700 comprises processor 702 and memory 704. In addition, it will be appreciated that the methods may be implemented by multiple computing apparatuses 700 (e.g. in a distributed computing environment).

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the invention. It will also be apparent that there are many variations that have not been described, but that fall within the scope of the appended claims.

## Claims

1. A computer-implemented method for providing a money transfer offer to a user, the method comprising:
determining whether one or more money transfer offers are applicable to a money transfer event that a user intends to initiate;
for each of the one or more money transfer offers applicable to the money transfer event:
sending a request to a smart contract proxy associated with a service, wherein the request is for information required to evaluate a criterion defined by the money transfer offer, and wherein the smart contract proxy is configured to:
record data associated with the request to a service invocation blockchain; and
forward the request to the service;
receiving the information required to evaluate the criterion;
determining that the information received from the service satisfies the criterion; and
providing, to a user device, the money transfer offer.

2. A computer-implemented method according to claim 1, further comprising capturing a user intent to initiate the money transfer event using a user device.

3. A computer-implemented method according to claim 2, wherein the user intent to initiate the money transfer event is captured via an application running on the user device.

4. A computer-implemented method according to claim 2 or claim 3, wherein the user intent to initiate the money transfer event is captured in response to the user providing a monetary amount and an identifier of a recipient via the user device.

5. A computer-implemented method according to any of claims 1 to 4, further comprising:
receiving an offer request from an offer provider, wherein the offer request includes information identifying the money transfer offer;
determining that the offer request includes a service subscription request for subscription to the service;
deploying a smart contract associated with the service subscription request;
deploying the smart contract proxy associated with the service.

6. A computer-implemented method according to claim 5, wherein deploying the smart contract proxy associated with the service comprises implementing network constraints to route all requests to the service via the smart contract proxy.

7. A computer-implemented method according to claim 5 or claim 6, wherein the smart contract is deployed to a subscription blockchain.

8. A computer-implemented method according to any of claims 5 to 7, further comprising providing an interface for the offer provider to input the offer request.

9. A computer-implemented method according to any of claims 5 to 8, further comprising:
identifying, based on the service subscription request, a smart contract template from a smart contract template repository; and
compiling the smart contract using the service subscription request and the smart contract template.

10. A computer-implemented method according to any of claims 5 to 9, further comprising:
receiving a marketplace subscription request from the offer provider, wherein the marketplace subscription request is for subscription to one or more services provided by one or more servers that implement the method; and
deploying, to a subscription blockchain, a smart contract associated with the marketplace subscription request.

11. A computer-implemented method according to any of claims 1 to 10, wherein the data recorded by the smart contract proxy to the service invocation blockchain comprises an indication of the request to the service.

12. A computer-implemented method according to any of claims 1 to 11, wherein the data recorded by the smart contract proxy to the service invocation blockchain comprises an indication of the availability of the service.

13. A computer-implemented method according to any of claims 1 to 12, further comprising:
receiving an offer subscription request from the user, wherein the offer subscription request is for subscription to the money transfer offer; and
deploying, to a subscription blockchain, a smart contract associated with the offer subscription request.

14. A computer system comprising:
one or more servers configured to:
determine whether one or more money transfer offers are applicable to a money transfer event that a user intends to initiate; and
for each of the one or more money transfer offers applicable to the money transfer event:
send a request to a smart contract proxy associated with a service, wherein the request is for information required to evaluate a criterion defined by the money transfer offer, and wherein the smart contract proxy is configured to:
record data associated with the request to a service invocation blockchain; and
forward the request to the service;
receive the information required to evaluate the criterion;
determine that the information received from the service satisfies the criterion; and
provide, to a user device, the money transfer offer.

15. A computer-readable medium comprising instructions which, when executed by one or more processors of one or more computing devices, cause the one or more computing devices to carry out the method of any of claims 1 to 13.
